# EUROPÄISCHE PATENTSCHRIFT

(11) **EP 1 425 207 B1**
(45) Veröffentlichungstag und Bekanntmachung des Hinweises auf die Patenterteilung: **28.11.2007**
(21) Anmeldenummer: 02774323.6
(22) Anmeldetag: 10.09.2002
(51) Int. Cl.: B62D 1/18

(54) **KRAFTFAHRZEUGLENKSÄULENEINHEIT MIT VERSTELLBARER LENKSÄULE**
MOTOR VEHICLE STEERING COLUMN UNIT WITH AN ADJUSTABLE STEERING COLUMN
UNITE DE COLONNE DE DIRECTION DE VEHICULE AUTOMOBILE COMPRENANT UNE COLONNE DE DIRECTION REGLABLE

(30) Priorität: 10.09.2001 DE 10144476
(43) Veröffentlichungstag der Anmeldung: 09.06.2004
(73) Patentinhaber: ZF Lenksysteme Nacam GmbH, 28259 Bremen (DE)
(72) Erfinder: SCHÄFER, Burkhard, 27777 Ganderkesee (DE); GRAMS, Kai-Uwe, 49692 Cappeln (DE); MICHALSKI, Herniu, 28816 Brinkum (DE); HORSAK, Günther, 88078 Meckenbeuren (DE); MÜLLER, Lutz, 88634 Herdwangen (DE)
(86) Internationale Anmeldenummer: PCT/DE2002/003366
(87) Internationale Veröffentlichungsnummer: WO 2003/022657

(56) Entgegenhaltungen:
- DE-A- 4 217 664
- DE-A- 4 409 046
- DE-A- 19 723 933
- US-A- 5 163 337

## Beschreibung

Die Erfindung betrifft eine Kraittahrr.euglenksäuleneinheit nach dem Oberbegriff des Patentanspruches 1.

Zur Erhöhung der Sicherheit und des Komforts verfügen Kraftfahrzeuge heute in der Regel über vielfältige Möglichkeiten Teile der Inneneinrichtung sowie Bedien- und Sicherheitselemente an die unterschiedliche Physiognomie ihrer Fahrer anzupassen. Zudem werden viele der vorgenannten Komponenten von Zulieferunternehmen als komplette Baugruppen an die Fahrzeughersteller geliefert, wobei Zulieferer, die unterschiedliche Fahrzeughersteller beliefern, aus ökonomischen Gründen bestrebt sind, die Baugruppen so zu gestalten, dass sie einfach und flexibel an den Einsatz in unterschiedlichen Fahrzeugtypen anpassbar sind.
Bereits seit längerem ist es auch bekannt, die Lenksäule eines Kraftfahrzeugs verstellbar zu gestallten. Durch eine Längsverschiebung und oder eine Änderung ihrer Neigung lässt sich dabei die Lage der Lenksäule entsprechend den Wünschen des Fahrers verändern. Bei teureren Automobilen bzw. moderneren Fahrzeugkonzepten erfolgt die Verstellung der Lenksäule elektromechanisch mittels eines oder mehrerer Antriebe. Ein Beispiel für eine in dieser Weise ausgebildete Lenksäuleneinheit wird durch die DE 196 41 152 A1 beschrieben. Die Verstellung der Lenksäule erfolgt, wie auch von anderen Lösungen her bekannt, mittels einer von einem Antrieb betätigten Verstellspindel und einer bzw. zwei auf der Spindel laufenden sowie in der Axialrichtung der Spindel beweglich gelagerten Spindelmuttern. Bei der dargestellten Lösung wird durch den Einsatz elektromechanischer Umschaltmechanismen erreicht, das die gleiche Spindel sowohl für die Längsverschiebung der Lenksäule als auch zur Veränderung ihres Neigungswinkels benutzt wird. Hierdurch bedarf es, abweichend von anderen Lösungen, nur eines Antriebs. Die Steuerung dieses Antriebs erfolgt durch eine beim Einbau der Lenksäuleneinheit in ein Kraftfahrzeug mit dieser zu verbindende Recheneinheit, in der Regel durch einen Zentralrechner des betreffenden Fahrzeugs. Aber gerade hierin ist ein gewisser Nachteil dieses Konzepts zu erblicken. So ist es aus fertigungsorganisatorischer Sicht im Hinblick auf die Zulieterer-Fahrzeughersteller-Bezichung als nachteilig anzusehen, dass durch die zur Ermöglichung der Verstellbarkeit erforderliche Verbindung der Lenksäuleneinheit mit einer Recheneinheit des Kraftfahrzeugs keine klare Systemabgrenzung gegeben ist. Eine solche Systemabgrenzung ist aber insbesondere aus Gewährleistungsgründen wünschenswert. Zudem werden die Möglichkeiten der an der Lenksäule realisierbaren Funktionen durch die Funktionalität und die Speicherkapazität der im Verhältnis zur Lenksäuleneinheit externen Fahrzeugelektronik vorgegeben bzw. gegebenenfalls dadurch auch teilweise beschränkt.

Aus der gattungsbildenden DE 42 17 664 A1 geht eine Kraftfahrzeuglenksäuleneinheit hervor, deren Lenksäule in der Längsrichtung und/oder in ihrem Neigungswinkel elektromechanisch verstellbar ist. Die Lenksäule ist als in sich geschlossene Baueinheit konzipiert und weist neben den zur Betätigung der Lenkung sowie zur elektrisch veranlassten Positionsänderung der Lenksäule erforderlichen mechanischen Elementen und Stellgliedern mindestens einen Antrieb, eine elektronische Steuereinheit zur Generierung von Steuersignalen für den Antrieb oder die Antriebe und elektrische Stellglieder sowie Anschlüsse zur Verbindung mit einem Bedienelement und dem Bordnetz auf. Derartige Lösungen sind auch aus der DE 197 23 933 A1 und der DE 44 09 046 A1 bekannt.

Aufgabe der Erfindung ist es, eine Kraftfahrzeuglenksäuleneinheit zu schaffen, welche einfach an unterschiedliche Fahrzeugtypen anpassbar sowie hinsichtlich ihrer Funktionalität bereits im Fertigungsprozess variabel konfigurierbar ist und bei welcher eine klare Systemabgrenzung gegenüber anderen Baueinheiten des Kraftfahrzeugs gegeben ist.

Die Aufgabe wird durch eine Kraftfahrzeuglenksäuleneinheit mit den Merkmalen des Hauptanspruchs gelöst. Vorteilhafte Aus- bzw. Weiterbildungen sind durch die Untcransprüche gegeben.

Die Kraftfahrzeuglenksäuleneinheit, deren Lenksäule in an sich bekannter Weise in der Längsrichtung und/oder hinsichtlich ihres Neigungswinkel elektromechanisch verstellbar ist, umfasst neben den zur Betätigung der Lenkung sowie zur elektrisch veranlassten Positionsänderung der Lenksäule erforderlichen mechanischen Elementen und Stellgliedern mindestens einen Antrieb, eine elektronische Steuereinheit zur Generierung von Steuersignalen für den oder die Antriebe und elektrische Stellglieder sowie Anschlüsse zur Verbindung der Einheit mit dem Bordnetz. Bei den mechanischen Elementen handelt es sich um Hebel, Lager und dergleichen sowie vorzugsweise um eine oder mehrere Verstellspindeln, auf denen bei ihrer Drehung axial verschieblich gelagerte Spindelmuttern laufen und durch ihre Bewegung auf der Spindel den Lcnkstock unmittelbar oder mittelbar über andere mit ihnen verbundene Elemente bewegen. Die Spindeln werden jeweils durch den Antrieb über Koppelelemente bzw. ein Getriebe in eine Drehbewegung versetzt. In erfindungswesentlicher Weise ist, abweichend vom Stand der Technik, die zur Ansteuerung des oder der Antriebe sowie gegebenenfalls weiterhin vorhandener elektrischer Stellglieder erforderliche Steuereinheit unmittelbar in die Lenksäuleneinheit integriert, so dass diese im Grunde als eine in sich geschlossene Baueinheit, also als eine alle zur Erfüllung ihrer Funktion erforderlichen Komponenten enthaltende Baueinheit ausgeführt ist. Neben den sich ergebenden technischen Vorteilen - vollständige Konfigurierbarkeit bereits beim Hersteller (Zulieferer) sowie Vereinfachung der Montage - wird hierdurch dem Erfordernis einer definierten Systemabgrenzung in besonders günstiger Weise Rechnung getragen. Wie später noch zu erläutern sein wird bedarf es beim Einbau der Lenksäuleneinheit in ein Kfz, je nach Einsatzfall, lediglich noch einer Verbindung mit der Bordspannung.
Die jeweilige Position der Lenksäule wird beim Einsatz im Zuge ihres Verstellens von der elektronischen Steuereinheit festgestellt, indem diese die auf eine Grundstellung der Lenksäule bezogene Relativbewegung auswertet. Hierzu erfolgt in der Steuereinheit eine mit der Bewegung der Lenksäule korrespondierende Signalbildung (vorzugsweise Inkrementbildung in Speicherzellen der Einheit), wobei die Bewegung der Lenksäule mittels geeigneter Sensoren erfasst wird. Zur Festlegung der Grundstellung der Lenksäule sind bei dieser Ausbildungsform an deren mechanischen Komponenten Endtaster angeordnet und mit der elektronischen Steuereinheit verbunden. Ausgehend von der Grundstellung - Lenksäule hinten, also aus der Fahrgastzelle zurückgezogen und oben - erfolgt in Speicherzellen der Steuereinheit vorzugsweise bei jeder oder bei jeder zweiten Umdrehung des Antriebs, mittels welchem die Lenksäule in die eine oder die andere Richtung bewegt wird, eine Inkrementbildung.
Eine andere Möglichkeit der Positionsbestimmung besteht in der Bestimmung der jeweiligen Absolutposition der Lenksäule. Dies erfolgt durch die Auswertung der Signale hierfür bei einer weiteren Ausbildungsform der Erfindung vorgesehener Geber, vorzugsweise Potentiometer. Die Absolutbestimmung der Position ist gegenüber der Relalivbestimmung unabhängig von Toleranzen mechanischer Teile. Daher kann bei dieser Ausbildungsform eine fortwährende Nachjustage entfallen.

Da zur Umsetzung der elektrisch veranlassten Bewegung mechanische Komponenten, wie die Verstellspindel, erforderlich sind, können sich bei langjährigem Betrieb der Baueinheit mechanische Toleranzen einstellen, welche zu Fehlern bei der Inkrementbildung führen können. Hierdurch wird die Lage der Lenksäule bei einem längeren Auflaufen solcher Toleranzen möglicherweise durch die Steuerelektronik nicht mehr exakt bestimmt. Um dies zu vermeiden, ist bei einer vorteilhaften Weiterbildung der mit einer Relativbestimmung der Position der Lenksäule arbeitenden Ausführungsform eine Selbstjuslagefunktion vorgesehen. Dabei wird die Lenksäule zyklisch, allerdings vorzugsweise nur bei stillgesetztem Kraftfahrzeugmotor in die Grundstellung bewegt, die Berechnung der Relativposition neu initialisiert und die Lenksäule wieder in ihre zuvor eingenommene Position bewegt. Auf diese Weise können im Hinblick auf die Positionsbestimmung eventuell "verlorengegangene Inkremente" wieder korrigiert werden. Die Bedingungen, nach denen dieser Selbstjustagevorgang ablaufen soll, werden als Firmware in der elektronischen Steuerung hinterlegt, welche gemäß der Erfindung ein integraler Bestandteil der Lenksäuleneinheit ist. Beispielsweise ist es denkbar, eine solche Selbstjustage jeweils nach dem Abziehen des Zündschlüssels durchzuführen.

Selbstverständlich muss das Verstellfeld der Lenksäule, insbesondere auch zum Schutz des oder der zur Verstellung dienenden Antriebe begrenzt werden. Dies erfolgt vorzugsweise mittels sogenannter Software-Endstops, also mittels in der Steuerung hinterlegter und durch diese während des Verstellvorgangs in entsprechender Weise ausgewerteter Parameter. Gemäß einer besonders vorteilhaften Ausbildung sind dabei die Software-Endstops variabel programmierbar, und zwar entweder durch den Hersteller im Fertigungsprozess oder durch den Fahrzeughersteller beim Einbau der Lenksäuleneinheit in ein Kraftfahrzeug, wobei die Programmierung des Verstellfeldes selbstverständlich nur innerhalb feststehender absoluter Grenzen möglich ist.

Die erfindungsgemäße Lenksäuleneinheit kann je nach dem vorgesehenen Einsatzzweck als autark arbeitende Einheit oder als eine in die Bordelektronik einzubindende Einheit ausgebildet werden. Im erstgenannten Fall verfügt die Lenksäuleneinheit, wie bereits oben erwähnt, neben Anschlüssen für ein Bedienelement lediglich über Anschlüsse zur Spannungsversorgung. Durch eine Einbindung in die Bordelektronik und den Austausch mit anderen Fahrzeugkomponenten lässt sich jedoch die Funktionalität der Baueinheit deutlich erhöhen. Daher verfügt eine vorteilhafte Ausbildungsform der erfindungsgemäßen Lenksäuleneinheit auch über Anschlüsse bzw. eine Schnittstelle zur Verbindung mit dem Datenbus eines Kraftfahrzeugs, Im Hinblick auf die gegenwärtig im Einsatz befindlichen Konzepte für die Kraftfahrzeugelektronik verfügt die Lenksäuleneinheit dabei vorzugsweise über eine Schnittstelle zum CAN-Dus (Controller Area Network).

Durch die Einbindung in den Fahrzeugbus ist es unter anderem auch möglich, die Lenksäuleneinheit in Abstimmung mit anderen Fahrzeugkomponenten einzustellen bzw. ihre Verstellung von unterschiedlichen Bedingungen bezüglich des Fahrzeugstatus zuzulassen oder zu sperren. Entsprechend einer besonders vorteilhaften Weiterbildung verfügt die elektronische Steuerung der Baueinheit weiterhin über eine Diagnosefunktion. Hierbei wird im Falle einer in der Baugruppe auftretenden Störung oder Fehlfunktion intern in dafür vorgesehenen Speichern der Steuereinheit ein Fehlercode gespeichert und gegebenenfalls das Verstellen der Lenksäule gesperrt. Im Falle der Einbindung in den Fahrzeugbus kann zur besseren Kontrolle für den Fahrer zudem eine Fehlermeldung generiert und über den Datenbus an ein Display im Kraftfahrzeug übermittelt werden. Eine weitere vorteilhafte Ausbildungsform für eine in das Bussystem einzubindende Lenksäuleneinheit verfügt über eine Key-IN/Key-OUT-Funktion. Hierbei bewegt sich die Lenksäule, veranlasst durch Steuersignale der elektronischen Steuerung, beim Einstecken des Zündschlüssels (oder Aktivieren der Zündung mittels einer Keycard oder ähnlichem) in eine vorgegebene, beispielsweise in einem Speicher der Steuerung hinterlegte Position für den Fahrbetrieb, während sie beim Abziehen des Zündschlüssels (oder Deaktivieren der Zündung bzw. Abschalten des Motors) in eine das Aus- und Einsteigen des Fahrers erleichternde Position bewegt wird. Die Information darüber, ob der Zündschlüssel eingesteckt oder abgezogen ist, erhält die Steuerung über den Datenbus des Kraftfahrzeugs, vorzugsweise in Form eines entsprechenden CAN-Signals.

Bei einer ebenfalls möglichen vorteilhaften Weiterbildung sind in dem Speicher der elektronischen Steuerung mehrere feste Positionen für die Lenksäule hinterlegbar, wobei die Lenksäule diese Positionen auf Grund einer entsprechenden Ansteuerung ihrer elektromechanischen Komponenten durch die Steuereinheit, veranlasst durch die Kommunikation mit anderen Fahrzeugbaugruppen oder eine Betätigung von Bedienelementen seitens des Fahrzeugbenutzers, einnimmt. So ist es zum Beispiel möglich, dass das Einnehmen einer solchen im Speicher der Steuereinheit hinterlegten Lenksäulenposition korrespondierend mit der Verstellautomatik und einer in diesem Zusammenhang vorgesehenen Memory-Funktion des Fahrzeugsitzes erfolgt.

Die Lenksäuleneinheit kann über separate Antriebe für die Längsverstellung und die Neigungsverstellung verfügen. Aus Kostengründen und im Hinblick auf eine Gewichtseinsparung ist jedoch einer Ausbildungsform mit nur einem Antrieb der Vorzug zu geben. Die Antriebskraft dieses Antriebes wird dabei veranlasst, durch Steuersignale der in die Baueinheit integrierten elektronischen Steuerung vermittels elektrischer Stellglieder, vorzugsweise Elektromagneten, auf entsprechende mechanische Elemente zum Verstellen der Lenksäule entweder in der Längsrichtung und/oder hinsichtlich ihrer Neigung übertragen.

Die erfindungsgemäße Kraftfahrzeuglenksäuleneinheit gestattet ein hohes Maß an Flexibilität hinsichtlich ihrer Anpassung an Kraftfahrzeugtypen und/oder Kundenwünsche, also die Wünsche des die Einheit einsetzenden Fahrzeugherstellers. Durch den Aufbau als praktisch selbstständig vollfunktionstüchtige Einheit, ist ihr Einsatz auch in Kraftfahrzeugen möglich, die, beispielsweise im Hinblick auf erforderliche Endstufen zur Ansteuerung des oder der Antriebe, nicht für den Einbau elektromechanisch verstellbarer Lenksäulen herkömmlicher Bauart vorgerüstet sind.

Die Erfindung soll nachfolgend anhand eines Ausführungsbeispieles näher erläutert werden. In den zugehörigen Zeichnungen zeigen:
- Figur 1:: Eine mögliche Ausbildungsform der erfindungsgemäßen Kraftfahrzeuglenksäuleneinheit;
- Figur 2:: Ein mögliches Prinzipschaltbild für die elektronische Steuereinheit und deren Außenbeschaltung;
- Figur 3:: Ein mögliches Steuerschema zur Verstellung der Lenkeinheit und zur Bereitstellung weiterer Funktionen unter Nutzung der Steuereinheit gemäß Figur 2 in einer Automatendarstellung;
- Figur 4:: Eine Untersetzung des Zustands Joystick-Operation gemäß der Figur 2, ebenfalls in Automatendarstellung;
- Figur 5:: Eine Untersetzung des Zustands Memory-Position gemäß der Figur 2 in Automatendarstellung.

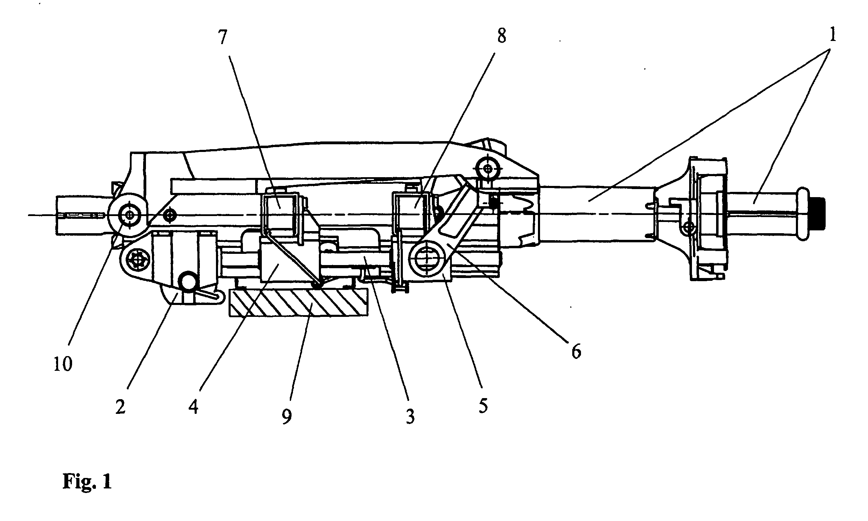

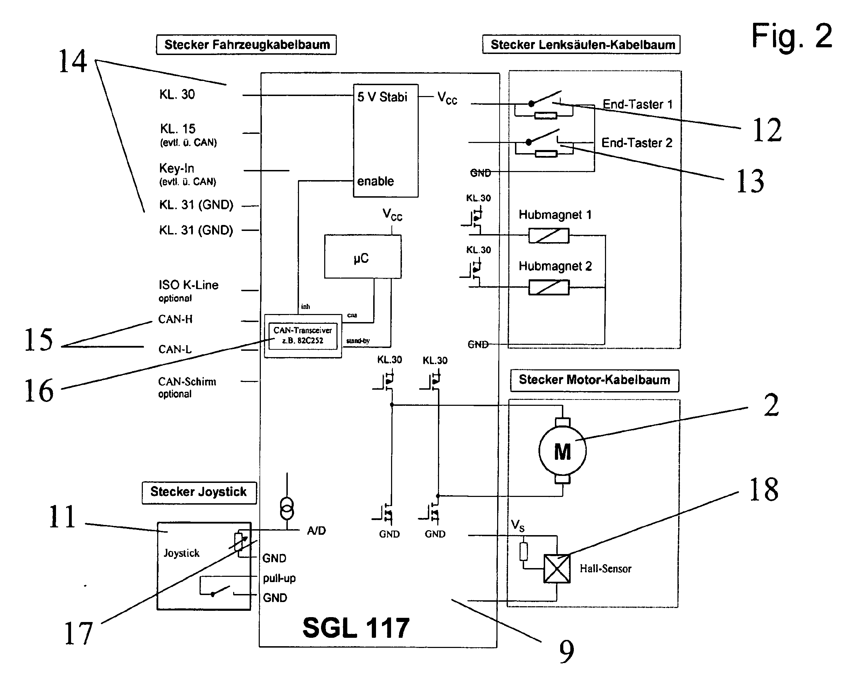

Durch die Figur 1 wird die erfindungsgemäße Kraftfahrzeuglenksäuleneinheit in einer grundsätzlichen Ausbildungsform dargestellt. Die Lenksäuleneinheit umfasst im Wesentlichen die Lenksäule 1, den Antrieb 2 zum Drehen der Verstellspindel 3, die auf der Verstellspindel 3 laufenden Spindelmuttern 4, 5, den die Bewegung der Spindelmutter 5 in eine Auf- und Ab- bzw. Schwenkbewegung der Lenksäule umsetzenden Schwenkhebel 6, die Stellglieder bzw. Elektromagneten 7, 8 und die elektronische Steuereinheit 9, welche wie zu erkennen, integraler Bestandteil der Baueinheit ist. Durch die elektronische Steuereinheit 9 werden bei Betätigung eines im Fahrzeug angeordneten - in der Figur 2 dargestellten - Bedienelementes 11 der Antrieb 2 und die Stellglieder 7, 8 angesteuert. Mittels einer von den Elektromagneten 7, 8, bei entsprechender Ansteuerung durch Verfahren eines (hier nicht dargestellten) Stiftes, hergestellten kraftschlüssigen Verbindung werden entweder die Spindelmutter 4 bzw. 5 oder beide Spindelmuttern 4, 5 festgehalten, so dass sich die Lenksäule 1 bei gleichzeitiger Drehbewegung der Verstellspindel 3 axial (in Längsrichtung) und/oder bezüglich ihres Neigungswinkels bewegt. Während die Ansteuerung des Elektromagneten 7 eine axiale Bewegung der Lenksäule 1 bewirkt, wird bei einer Ansteuerung des Elektromagneten 8 ihre Neigung durch ein Schwenken um den Drehpunkt 10 verändert. Beim Einbau in ein Fahrzeug muss die Lenksäuleneinheit zur Herstellung ihrer elektrisch/elektronischen Betriebsbereitschaft nur noch mittels vorzugsweise an der elektronischen Steuereinheit 9 angeordneter (in der Figur 2 dargestellter) Anschlüsse 14, 15, 17 mit dem Bordspannungsnetz, einem Bedienelement 11 und gegebenenfalls mit dem Fahrzeugbus verbunden werden, wobei das Bedienelement 11 auch unmittelbar an einer hier nicht dargestellten Verkleidung der Baueinheit angeordnet sein kann. Erfindungswesentlich ist die dezentrale Umsetzung der Betätigungssignale des Bedienelementes 11 oder der Verstellsignale anderer Fahrzeugeinheiten durch die in die Lenksäuleneinheit integrierte elektronische Steuereinheit 9 in Steuersignale für den Antrieb 2 und die Stellglieder 7, 8.

Die Figur 2 zeigt ein mögliches Prinzipschaltbild einer in den CAN-Bus eines Kraftfahrzeugs einzubindenden elektronischen Steuereinheit 9 mit zugehöriger Außenbeschaltung für eine Ausbildungsform der Erfindung mit relativer Positionsbestimmung der Lenksäule 1. Durch den Steuerschaltkreis wird der zur Betätigung der Verstellspindel 3 dienende Antrieb 2 angesteuert. Mittels eines Hallsensors 18 wird zur Detektierung einer Bewegung der Lenksäule für deren Positionsbestimmung ein Inkrementalgeberrad auf der Motorwelle des Antriebs 2 abgetastet. Die Grundstellung der Lenksäule 1, welche als Bezugspunkt für die Positionsbestimmung dient, wird durch die Taster 12, 13 (Endtaster 1, Endtaster 2) bestimmt. Die Verstellung der Lenksäule 1 erfolgt über mit der elektronischen Steuereinheit 9 verbundene Bedienelemente 11 (Schaltwippe oder dgl. - in der Figur mit Joystick bezeichnet). Neben Anschlüssen 14 für die Versorgungsspannung sind Kontakte (Anschlüsse) 15 zur Verbindung mit dem CAN-Datenbus vorgesehen. Der Datenaustausch mit dem CAN-Bus erfolgt über den sogenannten CAN-Transceiver 16.

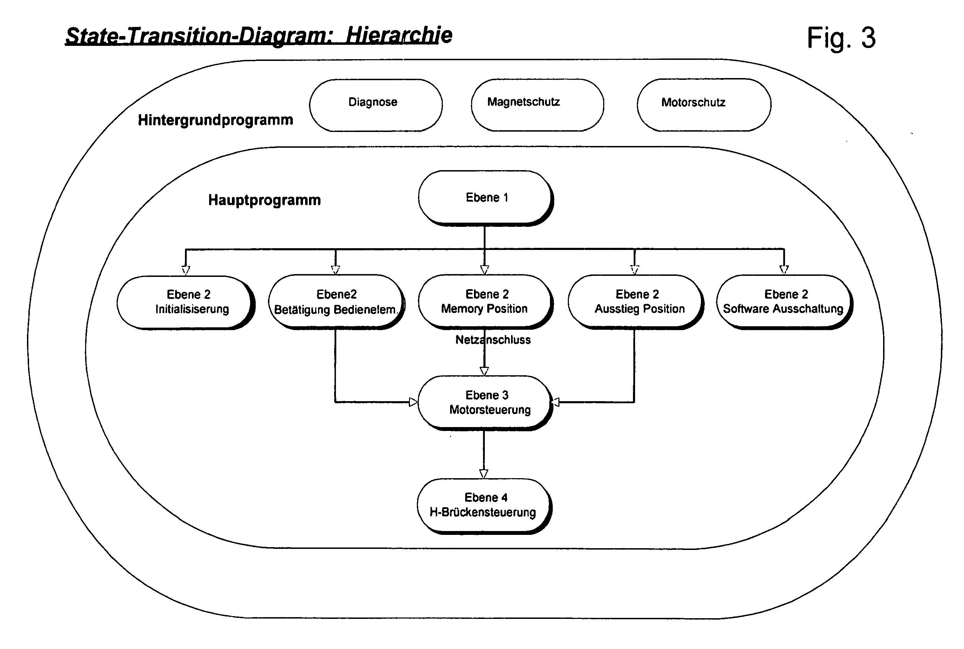

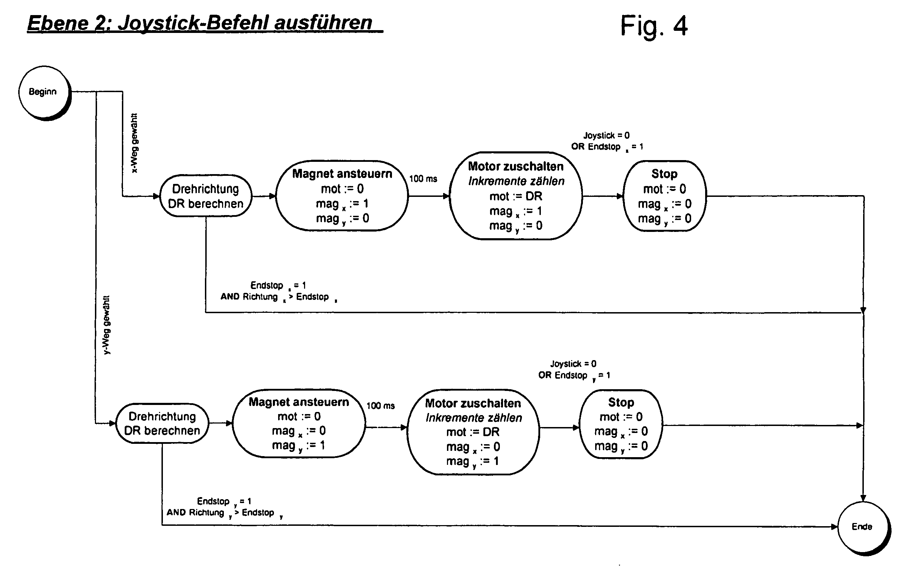

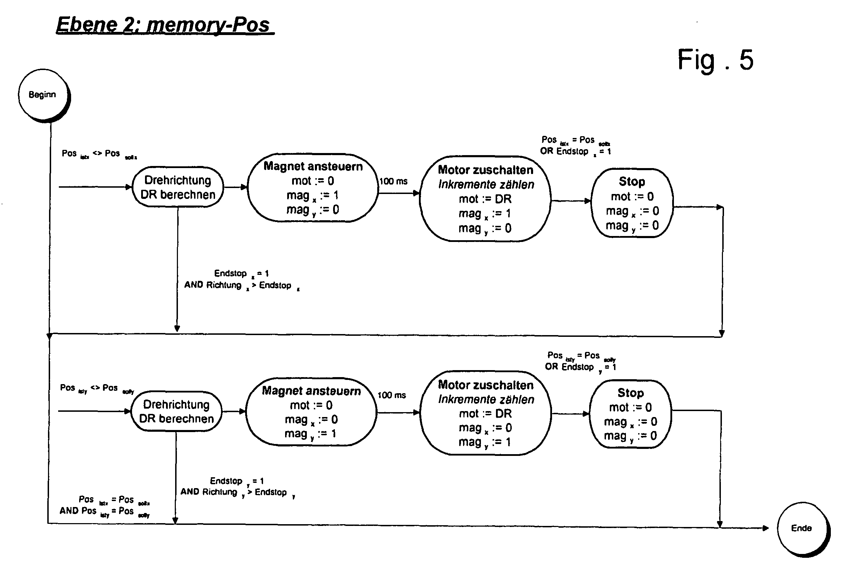

Durch die Figuren 3 bis 5 werden beispielhaft Steuerungsabläufe zur Realisierung unterschiedlicher Funktionen der Baueinheit in einer Automatendarstellung wiedergegeben. Die Figur 3 betrifft das grundsätzliche Steuerschema mit beispielhaften Funktionen. Eingebettet in ein Backgroundprogramm, welches unter anderem Funktionen der Diagnose und des Schutzes des oder der Antriebe bereitstellt und permanent im Hintergrund aktiv ist, läuft bei eingeschalteter Zündung das Hauptprogramm ab. In der Darstellung sind die unterschiedlichen Funktionen als hierarchischer Zustandsgraph wiedergegeben. Unterhalb des Level 1, der Gesamtsteuerung, werden im Level 2 die Funktionen Initialisierung, Joystick Operation, Memory Position, Exit Position sowie Software Power Down realisiert. Auf die beiden Funktionen Joystick Operation und Memory Position soll nachfolgend im Zusammenhang mit der Erläuterung zu den Figuren 4 und 5 näher eingegangen werden.

Die Funktion Joystick Operation (Betätigung einer Schaltwippe oder eines ähnlichen Bedienelementes zur Verstellung der Lenksäule 1 durch den Nutzer) ist in der Figur 4 hinsichtlich ihres Ablaufs durch einen Zustandsautomaten untersetzt. Im Falle einer Betätigung des zur Verstellung der Lenksäule 1 vorgesehenen Bedienelementes 11 wird durch die Steuereinheit 9 zunächst ermittelt, ob eine Verstellung in der Längsrichtung und/oder hinsichtlich der Neigung erfolgen soll. Entsprechend wird bei einer Längsverstellung in den Zweig "x-Weg gewählt" oder bei einer Verstellung der Neigung in den Zweig "y-Weg gewählt" verzweigt. Dann erfolgt die Berechnung der Bewegungsrichtung DR (Drehrichtung für den Antrieb 2). Anschließend wird der zur Umsetzung der Antriebskraft für die gewünschte Verstellung (Verstellung in Längsrichtung oder hinsichtlich der Neigung) vorgesehene Magnet 7 bzw. 8 angesteuert. Die Zuweisung magₓ : = 1 symbolisiert dabei die Ansteuerung des die Antriebskraft in eine Längsbewegung umsetzenden Magneten 7. Sofern nicht gleichzeitig auch eine Verstellung der Neigung erfolgen soll, ist dem zu Folge das andere elektrische Stellglied (Elektromagnet) 8 mag_{y} auf Null gesetzt. Der Antrieb 2 selbst wird bei dieser Zustandsposition noch nicht betätigt. Er bleibt zunächst ausgeschaltet (mot : = 0). Erst nach Betätigung des entsprechenden Elektromagneten 7 oder 8 wird der Antrieb 2 in Aktion versetzt (mot : = DR) und durch die elektronische Steuereinheit 9 werden dessen Umdrehungen durch Inkrementbildung gezählt.

Beim Eintreten einer entsprechenden Bedingung (der Joystick 11 wird entweder nicht mehr betätigt oder die maximale Verstellposition ist erreicht) wird der Zustand Stop eingenommen, bei dem der Antrieb 2 wieder abgeschaltet ist und die Elektromagnete 7, 8 nicht mehr angesteuert werden.

Durch die Figur 5 wird die Einnahme einer in der Steuereinheit 9 hinterlegten oder durch andere Fahrzeuggruppen (beispielsweise Fahrersitz) vorgegebenen Position der Lenksäule 1 (Memory Position) in einer mit der Figur 4 vergleichbaren Form dargestellt. Auch hier wird durch die Steuereinheit 9 zunächst ermittelt, ob das Verfahren der Lenksäule 1 in die vorgegebene Position ihre Bewegung in Längsrichtung und/oder in Bezug auf ihre Neigung erfordert. In entsprechender Weise werden anschließend die Elektromagnete 7, 8 und danach der Antrieb 2 angesteuert. Die Abbruchbedingung für die Bewegung ist hierbei durch das Erreichen der Sollposition (Pos_{ist x} = Pos_{soll x}bzw. Pos_{ist y} = Pos_{soll y}) oder eines Endstops gegeben.

### Bezugszeichenliste:

- 1: Lenksäule
- 2: Antrieb
- 3: Verstellspindel
- 4: Spindelmutter
- 5: Spindelmutter
- 6: (Schwenk-)Hebel
- 7: (elektrisches) Stellglied, Elektromagnet
- 8: (elektrisches) Stellglied, Elektromagnet
- 9: elektronische Steuerung
- 10: Drehpunkt
- 11: Bedienelement, Joystick oder Schaltwippe
- 12: (End-)Taster
- 13: (End-)Taster
- 14: Anschlüsse zur Spannungsversorgung
- 15: Busanschlüsse
- 16: CAN-Transceiver
- 17: Anschlüsse für Bedienelement
- 18: Hallsensor

## Patentansprüche

1. Kraftfahrzeuglenksäuleneinheit, deren Lenksäule (1) in der Längsrichtung und/oder in ihrem Neigungswinkel elektromechanisch verstellbar ist und welche als in sich geschlossene Baueinheit neben den zur Betätigung der Lenkung sowie zur elektrisch veranlassten Positionsänderung der Lenksäule (1) erforderlichen mechanischen Elementen (3, 4, 5, 6) und Stellgliedern (7, 8) mindestens einen Antrieb (2), eine elektronische Steuereinheit (9) zur Generierung von Steuersignalen für den Antrieb oder die Antriebe (2) und elektrische Stellglieder (7, 8) sowie Anschlüsse (14, 15, 17) zur Verbindung mit einem Bedienelement (11) und dem Bordnetz umfasst,
wobei die jeweilige Position der Lenksäule (1) von der elektronischen
Steuereinheit (9) vermittels einer Auswertung ihrer auf eine Grundstellung bezogenen Relativbewegung festgestellt wird, wobei zur Auswertung der Relativbewegung in der elektronischen Steuereinheit (9) eine mit der von Sensoren erfassten Bewegung der Lenksäule korrespondierende Signalbildung erfolgt oder
vermittels der elektronischen Steuereinheit (9) durch die Auswertung der Signale hierfür vorgesehene Geber eine Absolutbestimmung der jeweiligen Position der Lenksäule (1) erfolgt,
**dadurch gekennzeichnet, dass** die Baueinheit, respektive ihre elektronische Steuereinheit (9) neben Anschlüssen (17) für ein Bedienelement (11) lediglich Anschlüsse (14) zur Spannungsversorgung umfasst und im Übrigen gegenüber der Bordelektrik bzw. -elektronik autark ist.

2. Kraftfahrzeuglenksäuleneinheit nach Anspruch 1, **dadurch gekennzeichnet, dass** zur Festlegung einer Grundstellung der Lenksäule (1) an deren mechanischen Komponenten mit der elektronischen Steuereinheit (9) verbundene Endtaster (12, 13) vorgesehen sind.

3. Kraftfahrzeuglenksäuleneinheit nach Anspruch 1 oder 2, **dadurch gekennzeichnet, dass** die Baueinheit über eine Selbstjustagefunktion verfügt, vermittels welcher die Steuerung bei auflaufenden mechanischen Toleranzen eine mögliche Fehlberechnung der Relativposition der Lenksäule (1) vermeidet, indem die Lenksäule (1) veranlasst durch die elektronische Steuereinheit (9) zyklisch, vorzugsweise bei stillgesetztem Kraftfahrzeugmotor, in die Grundstellung bewegt, dabei die Berechnung der Relativposition neu initialisiert und die Lenksäule (1) wieder in ihre zuvor eingenommene Position bewegt wird.

4. Kraftfahzeuglenksäuleneinheit nach Anspruch 1, **dadurch gekennzeichnet, dass** zur Begrenzung des Verstellfeldes hinsichtlich der Längsverschiebung und der Neigung der Lenksäule (1) Software-Endstops vorgesehen sind, die durch von der elektronischen Steuereinheit (9), entsprechend darin hinterlegbaren Abbruchkriterien für das Verstellen der Lenksäule (1), generierte Steuersignale realisiert werden.

5. Kraftfahrzeuglenksäuleneinheit nach Anspruch 4, **dadurch gekennzeichnet, dass** die Software-Endstops mittels hierfür vorgesehener Bedienelemente programmierbar und **dadurch** in Anpassung an den Fahrzeugtyp oder an Vorgaben des Kraftfahrzeugherstellers variabel festlegbar sind.

6. Kraftfahrzeuglenksäuleneinheit nach Anspruch 1, **dadurch gekennzeichnet, dass** die Baueinheit neben Anschlüssen (17) für ein Bedienelement (11) über Anschlüsse zur Spannungsversorgung (14) und (15) zur Verbindung mit dem Datenbus eines Kraftfahrzeugs verfügt.

7. Kraftfahrzeuglenksäuleneinheit nach Anspruch 6, **dadurch gekennzeichnet, dass** die Baueinheit über Anschlüsse zur Einbindung in den CAN-Bus (Controller Area Network) eines Kraftfahrzeugs verfügt.

8. Kraftfahrzeuglenksäuleneinheit nach Anspruch 6 oder 7, **dadurch gekennzeichnet, dass** die elektronische Steuereinheit (9) über eine Diagnosefunktion verfügt, vermittels welcher im Falle einer in der Baugruppe auftretenden Störung oder Fehlfunktion, intern ein entsprechender Fehlercode gespeichert, das Verstellen der Lenksäule (1) gesperrt und/oder eine Fehlermeldung generiert sowie, bei einer Einbindung der Baueinheit in den Fahrzeugbus, an ein Display des Kraftfahrzeugs übermittelt wird.

9. Kraftfahrzeuglenksäuleneinbeit nach einem der Ansprüche 1 bis 8, **dadurch gekennzeichnet, dass** in einem Speicher der elektronischen Steuereinheit (9) feste Positionen für die Lenksäule (1) hinterlegbar sind, welche die Lenksäule (1) aufgrund der Kommunikation mit anderen Fahrzeugbaugruppen oder einer Betätigung von Bedienelementen (11) durch einen Fahrzeugbenutzer, veranlasst durch von der Steuereinheit (9) generierte sowie dem Antrieb (2) und elektrischen Stellgliedern (7; 8) zugeführte Steuersignale, einnimmt.

10. Kraftfahrzeuglenksäuleneinheit nach einem der Ansprüche 6 bis 8, **dadurch gekennzeichnet, dass** die Baueinheit über eine Key-In/Key-Out-Funktion verfügt, vermittels welcher sich die Lenksäule (1) veranlasst durch Steuersignale der elektronischen Steuereinheit (9) beim Einstecken des Zündschlüssels in eine vorgegebene oder in einem Speicher der Steuereinheit (9) hinterlegte Position und beim Abziehen des Zündschlüssels in eine das Aus- und Einsteigen des Fahrers erleichternde Position bewegt, wobei die elektronische Steuereinheit (9) Informationen darüber, ob der Zündschlüssel eingesteckt oder abgezogen ist, über den Datenbus des Kraftfahrzeugs erhält.

11. Kraftfahrzeitglenksäuleneinheit nach einem der Ansprüche 1 bis 9, **dadurch gekennzeichnet, dass** sowohl die Verstellung der Lenksäule (1) in der Längsrichtung als auch die Verstellung ihrer Neigung mittels ein und des selben elektrischen Antriebs (2) erfolgt, dessen Antriebskraft veranlasst durch die Steuersignale der in die Baueinheit integrierten elektronischen Steuereinheit (9) vermittels elektrischer Stellglieder (7, 8), vorzugsweise Elecktromagneten, auf mechanische Elemente (4, 5, 6) zum Verstellen der Lenksäule (1) in der Längsrichtung und/oder hinsichtlich ihrer Neigung übertragen wird.

## Claims

1. Motor vehicle steering column unit, the steering column (1) of which is electromechanically adjustable in longitudinal direction and/or in its angle of inclination and which as a self-contained constructional unit, besides the mechanical elements (3, 4, 5, 6) and actuators (7, 8) required for actuation of the steering and for electrically induced change of position of the steering column (1), comprises at least one drive (2), an electronic control unit (9) for generating control signals for the drive or drives (2) and electrical actuators (7, 8) as well as terminals (14, 15, 17) for connection to an operating element (11) and the vehicle electrical system, wherein the respective position of the steering column (1) is determined by the electronic control unit (9) by means of an evaluation of a relative movement thereof relative to a normal position, wherein for the evaluation of the relative movement in the electronic control unit (9) a signal formation, which corresponds to the movement of the steering column detected by sensors, is effected or
by means of the electronic control unit (9) by virtue of the evaluation of the signals [of] specially provided detectors an absolute determination of the respective position of the steering column (1) is effected,
**characterized in that** the structural unit and/or its electronic control unit (9), besides terminals (17) for an operating element (11), comprises merely terminals (14) for the power supply and is otherwise autonomous relative to the electrical and/or electronic system of the vehicle.

2. Motor vehicle steering column unit according to claim 1, **characterized in that** for defining a normal position of the steering column (1) there are provided on the mechanical components thereof momentary-contact position switches (12, 13), which are connected to the electronic control unit (9).

3. Motor vehicle steering column unit according to claim 1 or 2, **characterized in that** the constructional unit has a self-aligning function, by means of which the control system in the event of accumulating mechanical tolerances prevents a possible miscalculation of the relative position of the steering column (1) **in that** the steering column (1) induced by the electronic control unit (9) moves cyclically, preferably in the stopped state of the motor vehicle engine, into the normal position, in so doing the calculation of the relative position is re-initialized and the steering column (1) is moved back into its previously occupied position.

4. Motor vehicle steering column unit according to claim 1, **characterized in that** for limiting the range of adjustment with regard to the longitudinal displacement and the inclination of the steering column (1) software end stops are provided, which are realized by means of signals generated by the electronic control unit (9), in accordance with abort criteria for adjustment of the steering column (1) that are storable therein.

5. Motor vehicle steering column unit according to claim 4, **characterized in that** the software end stops are programmable by means of specially provided operating elements and are therefore definable in a variable manner by way of adaptation to the vehicle type or to specifications of the motor vehicle manufacturer.

6. Motor vehicle steering column unit according to claim 1, **characterized in that** the constructional unit, besides terminals (17) for an operating element (11), has terminals for the power supply (14) and (15) for connection to the data bus of a motor vehicle.

7. Motor vehicle steering column unit according to claim 6, **characterized in that** the constructional unit has terminals for incorporation into the CAN (controller area network) bus of a motor vehicle.

8. Motor vehicle steering column unit according to claim 6 or 7, **characterized in that** the electronic control unit (9) has a diagnostic function, by means of which, in the event of a fault or malfunction occurring in the assembly group, a corresponding error code is stored internally, adjustment of the steering column (1) is blocked and/or an error message is generated and, given an incorporation of the constructional unit into the vehicle bus, communicated to a display of the motor vehicle.

9. Motor vehicle steering column unit according to one of claims 1 to 8, **characterized in that** there may be stored in a memory of the electronic control unit (9) fixed positions for the steering column (1), which the steering column (1) adopts because of the communication with other vehicle assembly groups or an actuation of operating elements (11) by a vehicle user, induced by control signals that are generated by the control unit (9) and supplied to the drive (2) and electrical actuators (7; 8).

10. Motor vehicle steering column unit according to one of claims 6 to 8, **characterized in that** the constructional unit has a key-in/key-out function, by means of which the steering column (1) induced by control signals of the electronic control unit (9) upon insertion of the ignition key moves into a position, which is defined or stored in a memory of the control unit (9), and upon removal of the ignition key moves into a position that makes it easier for the driver to get in and out of the vehicle, wherein the electronic control unit (9) receives information about whether the key is in or out ' via the data bus of the motor vehicle.

11. Motor vehicle steering unit according to one of claims 1 to 9, **characterized in that** both the adjustment in longitudinal direction of the steering column (1) and the adjustment of the inclination of the steering column (1) are effected by means of one and the same electric drive (2), the drive force of which induced by the control signals of the electronic control unit (9) integrated into the constructional unit is transmitted by means of electrical actuators (7, 8), preferably electromagnets, to mechanical elements (4, 5, 6) for adjusting the steering column (1) in longitudinal direction and/or with regard to the inclination thereof.

## Revendications

1. Unité de colonne de direction de véhicule dont la colonne de direction (1) est réglable électromécaniquement dans la direction longitudinale et/ou en inclinaison et qui, en tant qu'unité structurelle fermée en soi, comporte, en plus des éléments mécaniques (3, 4, 5, 6) et des organes de réglage (7, 8) nécessaires à l'actionnement de la direction ainsi qu'au changement de position commandé électriquement de la colonne de direction (1), au moins un moyen d'entraînement (2), une unité de commande électronique (9) pour générer des signaux de commande pour le moyen d'entraînement ou les moyens d'entraînement (2) et les organes de réglage électriques (7, 8) ainsi que des connexions (14, 15, 17) pour la liaison avec un élément de manoeuvre (11) et avec le réseau de bord, la position instantanée de la colonne de direction (1) étant déterminée par l'unité de commande électronique (9) par l'intermédiaire d'une analyse de son déplacement relatif par rapport à une position initiale, un signal correspondant au déplacement de la colonne de direction détecté par des capteurs étant formé dans l'unité de commande électronique (9) pour analyser le déplacement relatif ou la position instantanée de la colonne de direction (1) étant déterminée en valeur absolue au moyen de l'unité de commande électronique (9) par l'analyse des signaux de générateurs prévus à cet effet, **caractérisée en ce que** l'unité structurelle, respectivement son unité de commande électronique (9) comprend, en dehors de connexions (17) pour un élément de manoeuvre (11), uniquement des connexions (14) pour une alimentation électrique et, pour le reste, est indépendante du réseau électrique, respectivement électronique de bord.

2. Unité de colonne de direction de véhicule selon la revendication 1, **caractérisée en ce que** des capteurs de fin de course (12, 13) reliés à l'unité de commande électronique (9) sont prévus sur les composants mécaniques de la colonne de direction (1) pour déterminer une position initiale de celle-ci.

3. Unité de colonne de direction de véhicule selon la revendication 1 ou 2, **caractérisée en ce que** l'unité structurelle dispose d'une fonction d'autoajustement qui, à l'apparition de tolérances mécaniques, permet à la commande d'éviter une éventuelle erreur dans le calcul de la position relative de la colonne de direction (1) par le fait que, sous l'action de l'unité de commande électronique (9), la colonne de direction (1) est amenée cycliquement, de préférence lorsque le moteur du véhicule est arrêté, en position initiale, que le calcul de la position relative est alors réinitialisé et que la colonne de direction (1) est ramenée dans sa position antérieure.

4. Unité de colonne de direction de véhicule selon la revendication 1, **caractérisée en ce que**, pour limiter le champ de réglage en déplacement longitudinal et en inclinaison de la colonne de direction (1), il est prévu des points d'arrêt programmés qui sont réalisés par des signaux de commande générés par l'unité de commande électronique (9) en fonction de critères d'interruption mémorisables dans celle-ci pour le réglage de la colonne de direction (1).

5. Unité de colonne de direction de véhicule selon la revendication 4, **caractérisée en ce que** les points d'arrêt programmés sont programmables au moyen d'éléments de manoeuvre prévus à cet effet et peuvent être fixés de manière variable en fonction du type de véhicule ou des prescriptions du constructeur du véhicule.

6. Unité de colonne de direction de véhicule selon la revendication 1, **caractérisée en ce que**, outre des connexions (17) pour un élément de manoeuvre (11), l'unité structurelle dispose de connexions pour l'alimentation électrique (14) et (15) pour la liaison au bus de données d'un véhicule.

7. Unité de colonne de direction de véhicule selon la revendication 6, **caractérisée en ce que** l'unité structurelle dispose de connexions pour la liaison au bus CAN (Controller Area Network) d'un véhicule.

8. Unité de colonne de direction de véhicule selon la revendication 6 ou 7, **caractérisée en ce que** l'unité de commande électronique (9) dispose d'une fonction de diagnostic au moyen de laquelle, à l'apparition d'une défaillance ou d'un dysfonctionnement dans l'ensemble structurel, un code d'erreur correspondant est mémorisé en interne, le réglage de la colonne de direction (1) est bloqué et/ou un message d'erreur est généré et, en cas de liaison de l'unité structurelle au bus du véhicule, est transmis à l'afficheur du véhicule.

9. Unité de colonne de direction de véhicule selon une des revendications 1 à 8, **caractérisée en ce que** dans une mémoire de l'unité de commande électronique (9) peuvent être sauvegardées des positions fixes de la colonne de direction (1), lesquelles positions fixes sont adoptées par la colonne de direction (1) en fonction de la communication avec d'autres ensembles structurels du véhicule ou de l'actionnement d'éléments de manoeuvre (11) par un utilisateur du véhicule, ledit actionnement étant déclenché par des signaux de commande générés par l'unité de commande (9) et envoyés au moyen d'entraînement (2) et à des organes de réglage électriques (7 ; 8).

10. Unité de colonne de direction de véhicule selon une des revendications 6 à 8, **caractérisée en ce que** l'unité structurelle dispose d'une fonction clé entrée/clé sortie au moyen de laquelle la colonne de direction (1), sous l'action de signaux de commande de l'unité de commande électronique (9), se déplace, lors de l'introduction de la clé de contact, vers une position prédéterminée ou mémorisée dans une mémoire de l'unité de commande (9) et, lors du retrait de la clé de contact, dans une position facilitant la sortie et l'entrée du chauffeur, l'unité de commande électronique (9) recevant, par l'intermédiaire du bus de données du véhicule, des informations sur le fait que la clé de contact est insérée ou retirée.

11. Unité de colonne de direction de véhicule selon une des revendications 1 à 9, **caractérisée en ce qu'**aussi bien le réglage de la colonne de direction (1) dans la direction longitudinale que le réglage de son inclinaison s'effectue au moyen d'un seul et même moyen d'entraînement électrique (2) dont la force motrice, sous l'action des signaux de commande de l'unité de commande électronique (9) intégrée dans l'unité structurelle, est transmise, au moyen d'organes de réglage électriques (7, 8), de préférence d'électroaimants, à des éléments mécaniques (4, 5, 6) pour régler la colonne de direction (1) dans la direction longitudinale et/ou en inclinaison.
